# EUROPEAN PATENT APPLICATION

(11) **EP 2 209 348 A1**
(43) Date of publication of application: **21.07.2010**
(21) Application number: 09100042.2
(22) Date of filing: 14.01.2009
(51) Int. Cl.: H04W 88/12

(54) **Simplified home access**

(71) Applicant: Nokia Siemens Networks OY, 02610 Espoo (FI)
(72) Inventor: The designation of the inventor has not yet been filed
(74) Representative: Bruglachner, Thomas E.

(57) **Abstract**

The present invention relates to methods and apparatuses for providing network access, wherein a connection to a core network is established via a wireless access device (10) and a gateway device (20). Connectivity of the wireless access device (10) is restricted to a single address of the core network, wherein the single address is used to establish the connection to a pre-defined gateway device (20) with multinode connectivity. The gateway device (20) is provided with a relay function for mapping a single input address to a plurality of core network addresses based on a location information of the wireless access device (10).

## Description

### FIELD OF THE INVENTION

The present invention relates to methods and apparatuses for providing wireless access to a core network, such as - but not limited to - Universal Mobile Communication System (UMTS) or Long Term Evolution (LTE) networks.

### BACKGROUND OF THE INVENTION

Home base stations, home NodeBs, femto eNodeBs or any other type of home access device (in the following referred to as "HNB") have become a widely discussed topic within 3^{rd} Generation Partnership Project (3GPP) as well as in the operator and manufacturer community. When deployed in homes and offices, HNBs allow subscribers to use their existing handsets - in a building - with significantly improved coverage and increased broadband wireless performance. Moreover, Internet Protocol (IP) based architecture allows deployment and management in virtually any environment with broadband Internet service.

With the introduction of High Speed Downlink Packet Access (HSDPA) in various commercial networks, operators noticed quite substantial date rate, i.e. capacity, consumption of single users. Those are in most cases users staying at home and using a HSDPA data card or the like for substantial Internet surfing like downloading movies etc. However, existing mobile communication systems (e.g. Global System for Mobile communications (GSM), Wideband Code Division Multiple Access (WCDMA/HSDPA) are not optimal suited for such home-based application, as those were developed and defined under the assumption of coordinated network deployment, whereas HNBs are typically associated with uncoordinated and large scale deployment.

In HNB scenarios, it is generally assumed that an end user is buying a cheap (Wireless Local Area Network (WLAN) like) product and also installs this physical entity at his home. Such a HNB would then provide coverage/service to the terminals registered by the owner of the HNB. Still the HNB would use the same spectrum owned by the operator and as such at least partly the spectrum the operator is using to provide macro cell coverage to the area where the HNB is located in.

Moreover, sharing and pooling properties of the core network, where several operator's core networks are attached to the same access node or foreign mobile terminal devices or user equipments (UEs) roam into a HNB nominally "owned" by a certain operator, should be hidden to the HNB, in order to ease handling of the HNB. In general, conventional access devices, such as NodeBs or eNodeBs, being function-wise similar to HNBs, bear a lot of nodal functions which are not necessary for simple home operation.

### SUMMARY

It is an object of the present invention to provide simplified network access for HNB-like scenarios.

This object is achieved by a method of providing network access, said method comprising:
- establishing a connection to a core network via a wireless access device;
- restricting connectivity of said wireless access device to a single address of said core network; and
- using said single address to establish said connection to a pre-defined gateway device with multi-node connectivity.

Furthermore, the above object is achieved by a method of providing network access, said method comprising:
- using a gateway device for establishing a connection from a wireless access device to a core network; and
- providing said gateway device with a relay function for mapping a single input address to a plurality of core network addresses based on a location information of said wireless access device.

Additionally, the above object is achieved by an apparatus for providing access to a core network, said apparatus comprising:
- connecting means which provide a connectivity restricted to a single address of said core network; and
- addressing means for using said single address to establish said connection to a pre-defined gateway device with multi-node connectivity.

Finally, the above object is achieved an apparatus for establishing a connection from a wireless access device to a core network, said apparatus comprising relay means for mapping a single input address to a plurality of core network addresses based on a location information of said wireless access device.

Accordingly, due to the restricted single-node connectivity of the wireless access device (e.g. HNB), multi-node functionalities, like network node selection function (NNSF) and multi-core-network-node connectivity, can be removed from and completely located outside the wireless access network. They can be centralized at a gateway node between the wireless access network and the core network, e.g. an evolved packet core (EPC). Thereby, access device functions (e.g. LTE eNB S1 functions and the like) can be simplified. Support is given by means of a corresponding functionality at the gateway device.

Moreover, efforts in manufacturing, deployment, configuration, operation and maintenance of the wireless access devices can be reduced. Providing parts of the access node functions in a network equipment external to the wireless access node circumvents complexity of all mentioned aspects. Furthermore, in mass deployment, this is advantageous due to lower production costs, lower operational costs and simpler handling of connectivity towards the core network.

A user-plane connection may be established to the gateway device via a single Internet Protocol address. Additionally, a control-plane connection may be established to the gateway device via a single transmission protocol association containing a single transmission protocol stream and a single Internet Protocol address. The cell of the wireless access device may be established as a closed subscriber group cell identified by a tracking area identifier.

The gateway device may provide connections to the core network via several Internet Protocol addresses and several transmission protocol streams. An automatic setup of the gateway device with a pre-defined identification. The predefined identification may comprise a tracking area with at least one dedicated tracking area code.

Furthermore, a mapping table may be provided to translate the location information to a connectivity information of a pool of mobility management entities of at least one of owning and foreign operators. The pool of mobility management entities may be selected based on a sub-number-space allocation to a respective operator or directly based on a network identity.

The relay function or means may be used to relate a location of the wireless access device to a pool of mobility management entities serving a macro access device which provides a macro cell under which said wireless access device is located. Then, handover messages may be relayed between the wireless access device and the macro access device by the relay function or means. Additionally or alternatively, the relay function or means may be used to map a global cell identity to a global identity of the macro access device or the pool of mobile management entities.

As another option, the relay function or means may be used to translate a tunnel endpoint identifier allocated by the wireless access device to a core network range. The core network range may for example be signaled to the wireless access device.

As a further option, the relay function or means may be used to provide a logical signaling interface (e.g. an X2 interface) between the wireless access device and other wireless access devices. The logical signaling interface may then be used for executing at least one of authentication and authorization functions, radio resource management tasks, data forwarding during handover procedures, load information signaling, and general signaling between peer access devices. In a specific example, the relay function or means may be used to identify control-plane traffic based on identification information embedded in messages of the logical signaling interface.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a schematic network architecture with a HNB gateway in a non-network sharing case according to a first embodiment;
Fig. 2 shows a schematic block diagram of a HNB and a HNB gateway according to various embodiments;
Fig. 3 shows a schematic processing and signaling diagram of an interaction between a HNB gateway and several mobility management pools;
Fig. 4 shows a schematic network architecture of a HNB gateway in a network sharing case according to a second embodiment;
Fig. 5 shows a schematic processing and signaling diagram of a handover procedure from a macro NB to a HNB;
Fig. 6 shows a schematic processing and signaling diagram of a handover procedure from a HNB to a macro NB;
Fig. 7 shows a schematic network architecture with a HNB as X2 termination point according to a third embodiment;
Fig. 8 shows a schematic processing and signaling diagram of an admission control procedure involving a HNB;
Fig. 9 shows a schematic processing and signaling diagram of a load management procedure between a HNB and a macro NB; and
Fig. 10 shows a schematic block diagram of software-based implementation according to a fourth embodiment.

### DESCRIPTION OF THE EMBODIMENTS

In the following, embodiments of the present invention will be described based on exemplary and non-limiting LTE network architectures.

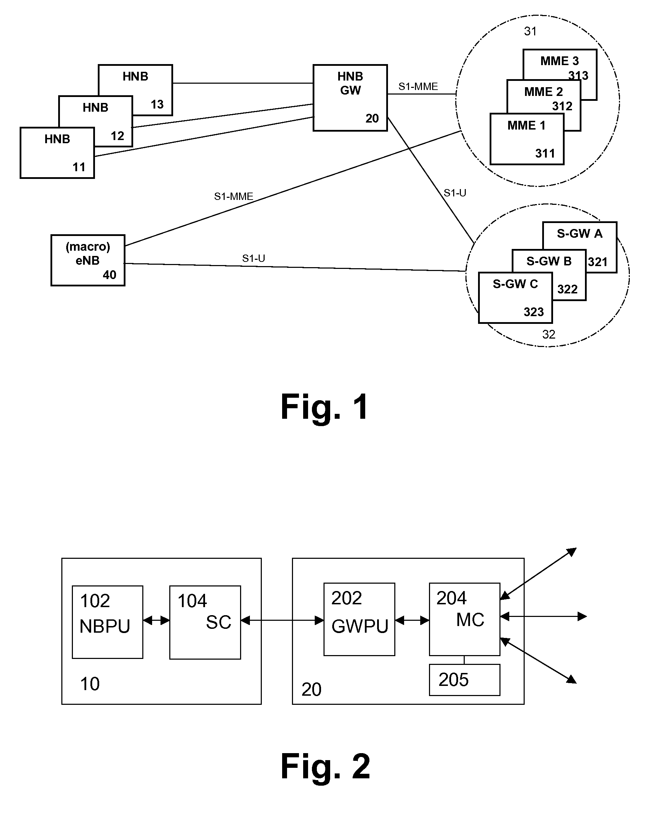

Fig. 1 shows a schematic network architecture with a HNB gateway in a non-network sharing case according to a first embodiment.

According to Fig. 1, several Home eNodeBs (HNBs) 11 to 13 with reduced functionality are provide in a subscriber home environment, e.g. within a building, and are connected to a HNB gateway (node) 20. the HNB gateway 20 provides connection via an S1-MME reference point to a pool 31 of mobility management entities 311 to 313 and via an S1-U reference point to a pool 32 of signaling gateways (S-GWs) 321 to 323. Both MME and S-GW pools 31 and 32 provide connections to a macro eNB 40 which serves a macro cell in or under which the HNBs 11 to 13 are located. The protocol over the S1-MME reference point can be enhanced Radio Access Network Application (eRANAP) and may use Stream Control Transmission Protocol (SCTP) as the transport protocol. The S1-U reference point can be used for per-bearer user plane tunneling and inter-eNB path switching during handover. The transport protocol over this interface may be General Packet Radio Services (GPRS) tunneling protocol - user plane (GTP-U).

According to the first and other embodiments, standard functionality, such as for example, NNSF and multi-CN-node connectivity is located outside the HNBs 11 to 13 and is now centralized in the HNB gateway 20 between HNBs 11 to 13 and the core network (e.g. EPC (Evolved Packet Core)).

The following simplifications can be introduced in the proposed HNB architecture, in favour of the proposed introduction of the HNB gateway 20.

As to their control plane functionality, the connectivity of the HNBs 11 to 13 is restricted to connect (at least logically) to a single core network node, i.e. the pooling property of the control plane of the core network should be transparent to the HNBs 11 to 13. This eases configuration setup of the HNBs 11 to 13 and handling of connectivity towards the core network within the HNBs 11 to 13. In the specific example of the first embodiment, the HNBs 11 to 13 may connect to the core network via a single SCTP association containing a single SCTP stream and a single IP address (i.e. no IP multihoming). This is different to the S1-C property of the macro eNB 40, where common S1AP procedures are handled via a separated SCTP stream and dedicated S1AP procedures via a few SCTP streams.

Nit is noted that a single SCTP stream is usually not used to map 1:1 to a UE dedicated connection, IDs generated by the application part shall be used to establish UE dedicated S1 signalling relations between UE dedicated contexts located in the MME pool 31 and the eNB 40.

Consequently, the HNBs 11 to 13 connect control-plane-wise only to a single network node of the core network and do not contain any NNSF (S1-flex) function. This function is now located in the HNB gateway 20.

As to their user plane functionality, the HNBs 11 to 13 connect to the core network via a single IP address. Handling of tunnel endpoint identifiers (TEIDs) can take place without specific requirements for uplink (UL) traffic (e.g. the TEID can be allocated by the EPC's S-GWs 321 to 323).

Furthermore, the HNBs 11 to 13 can be logically connected to the same MME of the MME pool 31, which serves the macro layer as well. By this measure, unnecessary mobility actions (e.g. inter-MME pool handover at the HNBs 11 to 13 or HO scenarios at the macro eNB 40). the HNB gateway 20 might be restricted to a certain geographical area, corresponding to an MME pool area.

The HNB gateway 20 is adapted to relate the location of the HNBs 11 to 13 with the MME pool 31 serving the eNB 40 that provides the macro cell under which the respective HNB is located. In this manner it avoids inter-MME handovers (HOs). As to its control plane functionality, the HNB gateway 20 holds information about connectivity to various operators' core networks (e.g. MME pools). In order to enable S1-flex connectivity for the HNBs 11 to 13, without deploying and configuring the HNBs 11 to 13 with this functionality, the HNB gateway 20 provides a 1:n relay functionality. This can be based on the provision of global node-ID's on S1AP protocol level. Hence, the HNB gateway 20 acts - in principle - similar to a (macro) eNB towards the core network, i.e., it performs automatic registration towards (a pool of) MME entities. A specific tracking area identity or identification (which may consist of a tracking area code (TAC) out of a range of specific TACs, indicating a closed subscriber group (CSG) and/or a home access) indicated during an automatic setup could indicate the specific property of the HNB gateway 20.

The HNB gateway 20 can be connected via several IP addresses (IP multihoming) and at least several SCTP streams (on dedicated or common signalling). Connectivity between the HNBs 11 to 13 and the HNB gateway 20 can be established on demand and this might change dependent on the activity of a HNB or users choice. This dynamic connectivity-behaviour, which may be more dynamic than from the macro eNB 40 can be transparent to the core network.

Thus, the HNB gateway 20 acts towards the HNBs 11 to 13 as a single core network node, and towards the core network as a single eNB. As already mentioned, the HNB gateway 20, acting as an eNB towards a core network node might necessitate to itself at automatic S1 setup with a specific identification, e.g. a tracking area with a specific tracking area code (a single specific one or out of a set of dedicated "home" Tracking Area Codes). This information can be provided on the HNB broadcast channel.

Additionally, the HNB gateway may hold (store) at least one mapping table to translate the location information provided by the HNBs 11 to 13 to an MME-pool connectivity information, e.g., not only of the "owning" operator but also of foreign-operators. Thereby, the HNB gateway 20 can relay HO messages from/to the HNBs 11 to 13 to the macro eNB 40, with corresponding translation of identifiers, if needed.

As to its user plane functionality, the HNB gateway 20 translates (DL) TEIDs allocated by the HNBs 11 to 13, as the HNB gateway 20 acts as a single node and the ranges selected by the HNBs 11 to 13 may overlap (depending on implementation specifics). Another alternative could be to coordinate/control TEID assignment by the core network, and signal towards the HNBs 11 to 13 the range of (DL) TEIDs they iare allowed to allocate at setup.

Fig. 2 shows a schematic block diagram of a HNB 10 and a HNB gateway 20 according to various embodiments.

The HNB 10 comprises a NodeB processing unit (NBPU) 102 for performing NodeB-related signal and control processing with the restrictions according to the embodiments described herein. The NBPU 102 may be implemented as a software controlled central processing unit (CPU) or any other processor device. Furthermore, the HNB 10 comprises a single-connectivity unit (SC) 104 which is controlled by the NBPU 102 and which is configured to restrict the connectivity of the HNB 10 to a single core network connection towards the HNB gateway 20. The SC 104 may be implemented as a subroutine which controls the NBPU 102 or as a separate software-controlled CPU or any other processor device.

Furthermore, according to Fig. 2, the HNB gateway 20 comprises a gateway processing unit (GWPU) 202 for performing the above mentioned multi-node related signal and control processing extracted from conventional eNBs. The GWPU 202 may be implemented as a software controlled central processing unit (CPU) or any other processor device. Furthermore, the HNB gateway 20 comprises a multi-connectivity unit (MC) 204 which is controlled by the GWPU 202 and which is configured to provide the above mentioned 1:n relay functionality. Mapping of addresses, locations, or IDs can be achieved by a memory or look-up table (LUT) 205 which stores corresponding mapping table(s). The MC 204 may be implemented as a subroutine which controls the GWPU 202 or as a separate software-controlled CPU or any other processor device.

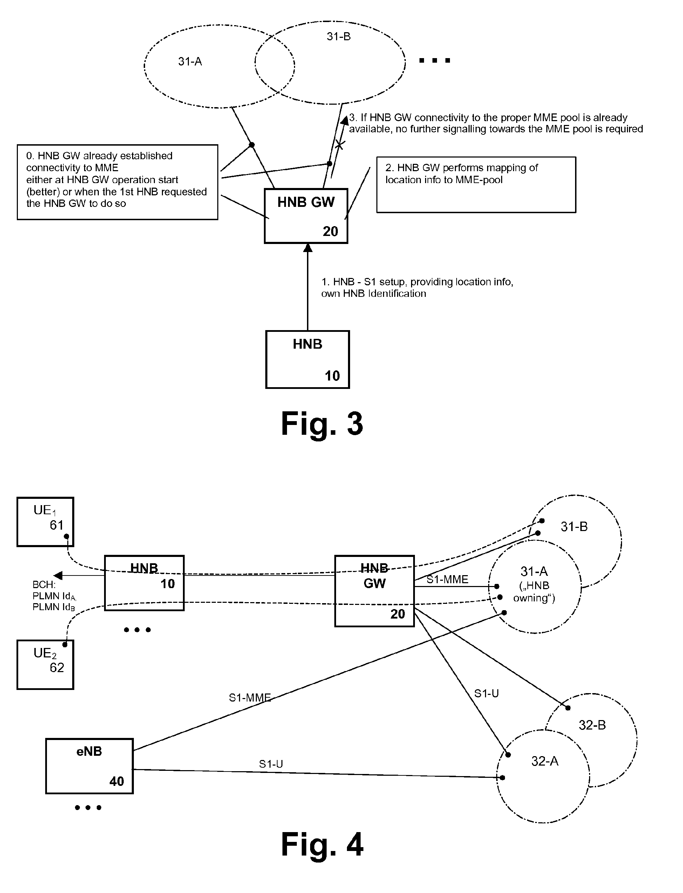

Fig. 3 shows a schematic processing and signaling diagram of an interaction between the HNB gateway 20 and several MME pools 31-A and 31-B.

This multi MME pool environment results in the following properties of the HNB gateway 20.

As to its control plane functionality, the HNB gateway 20 of Fig. 3 provide a 1:n relay functionality in order to enable S1-flex connectivity, where the HNB 10 is connected to multiple core network entities, without deploying and configuring the HNB 10 with this functionality. The S1-flex concept provides support for network redundancy and load sharing of traffic across network elements in the core network, the MME and the SGW, by creating the MME pools 31-A and 31-B and SGW pools (not shown in Fig. 3) and allowing the HNB 10 to be connected to multiple MMEs and SGWs in a pool. As this kind of connectivity can no more rely on transport network layer (TNL) addresses only (as for example if two UEs are registered in different MMEs of an MME-pool), global node ID's could be provided on S1 application protocol (S1AP). Abstraction of the MME pool structure may be anyhow be considered for keeping HNB operation simple.

Thus, as already mentioned, the HNB gateway 20 acts - in principle - similar to a (macro) eNB towards the core network. I.e., it performs automatic registration towards the MME pools 31-A and 31-B.

According to Fig. 3, it is assumed that the HNB gateway 20 already established connectivity to the MME pools 31-A and 31-B in step 0 either at its operation start or when the first HNB requested to do so. Later, the HNB 10 initiates S1 setup in step 1, by providing its location information and an own HNB identification. In step 2, the HNB gateway 20 performs mapping of the received location information to the one of the MME pools 31-A and 31-B, e.g., based on the LUT 205 of Fig. 2. Finally, if required, connectivity to the proper MME pool (e.g. MME pool 31-B) is established in step 3 by a corresponding control signalling. However, in the present case, no further signalling towards the proper MME pool 31-B is required, as the HNB gateway 20 connectivity to the MME pool 31-B is already available.

Fig. 4 shows a network architecture with the HNB gateway 20 in a sharing scenario according to a second embodiment. The HNB 10 is assumed to be "owned" by an operator. The HNB gateway 20 connects to that MME pool for which the macro layer connects as well. This is supposed to be a hard decision.

At control plane level, the HNB 10 connects (at least logically) to a single MME-pool 31-A of the "HNB-owning" operator, i.e. the sharing-property of the control plane core network should be transparent to the HNB 10. Even if the MME-pool(s) 31-B of "non-owning" operators are assumed to serve different geographical areas as the MME-pool of the "owning" operator, this property holds as for the macro-layer case. This requires the HNB gateway 20 to hold mapping tables (e.g. in the LUT 205 of Fig. 2) to translate the location information provided by the HNB 10 to MME-pool connectivity not only of the "owning" operator but also of foreign-operators.

It is assumed that the HNB 10 is configured by the HNB gateway 20 with regard to the Public Land Mobile Network (PLMN) IDs to be broadcasted. In Fig. 4, PLMN IDs Id_{A} and Id_{B} are broadcasted to a first UE 61 and a second UE 62, respectively. Then, the first UE 61 is connected to the MME pool 31-B of the non-owning operator and the second UE 62 is connected to the MME pool 31-B of the owning operator. Alternatively, operation and maintenance (O&M) configuration can be envisaged, but it would be somehow strange not to use the available automatic S1 setup procedure, bearing in mind that the HNB gateway 20 stores information about connectivity to various operators' core networks (MME pools).

The sharing scenario according to the second embodiment, leads to the following properties of the HNB gateway 20. At control plane level, whereas for non-roaming scenarios, no necessity is given to deal with global node IDs, for sharing scenario the advantage is apparent. Depending on the way, the first and second UEs 61, 62 indicate their chosen PLMN to the network, the operator specific MME pool is either selected by NNSF based on sub-number-space allocations to the respective operators or directly by the PLMN-ID (e.g. indirect via indexes, i.e. PLMN-Id1 (in the broadcasted list, or the default one) is not indicated, the subsequent PLMN-Ids are indicated according to the order in the broadcasted list). In any case, a temporary mobile subscriber identity (e.g. S-TMSI) can indicated either alone or together with the PLMN-ID to the HNB gateway 20 which performs pool and node selection according to routing tables of the NNSF functionality (which may be provided by the MC 204 of Fig. 2).

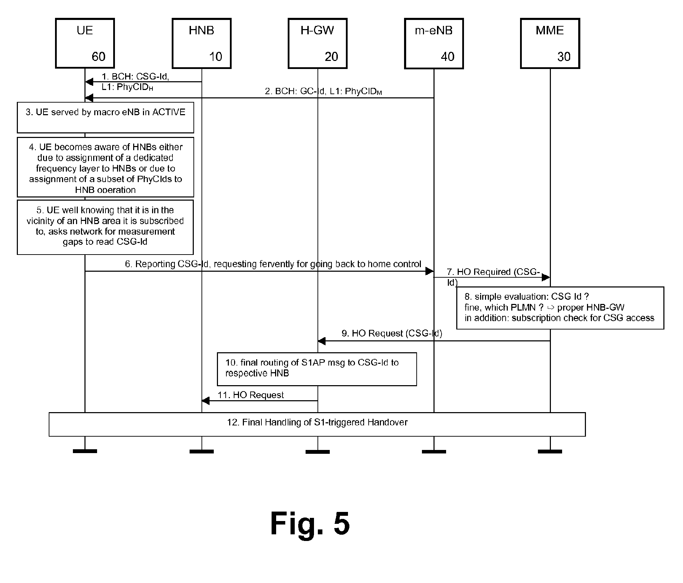

Fig. 5 shows a schematic processing and signalling diagram of an intra-LTE handover procedure from a macro eNB 40 to a HNB 10.

In step 1, the HNB 10 broadcasts to a UE 60 a CSG-ID and a physical cell ID of its home cell. Additionally, the UE 60 receives in step 2 from the macro eNB 40 a global cell ID and a physical cell ID of the macro cell which includes the smaller home cell. In step 3, the UE 60 which is served by the macro eNB 40 is in an active connection state. Then, in step 4, the UE 60 becomes aware of the HNB 10 either due to assignment of a dedicated HNB frequency layer or due to assignment of a subset of physical IDs to HNB operation. In step 5, the UE well knowing that it is in the vicinity of an HNB area it is subscribed to, asks the network for measurement gaps to read the CSG-ID. Having read the CSG-ID, the UE 60 reports the CSG-IS in step 6 to the macro eNB 40 and requests for going back to home control by the HNB 10. In step 7, the eNB 40 sends a handover request with the CSG-ID to an MME 30. In response thereto, the MME 30 checks the CSG ID with regards to the PLMN and subscription in step 8, and issues a handover request with the CSG-ID to the HNB gateway 20 in step 9 if it is the proper gateway and a proper subscription. In step 10, the HNB gateway 20 initiates a final routing of S1AP message with the CSG-ID to the respective HNB 10. Furthermore, in step 11, the HNB gateway 20 sends a handover request to the HNB 10 to initiate a final handling of an S1-triggered handover in step 12.
As to the resulting properties of the HNB gateway 20 in the above handover case, the EPC/MME must not really evaluate the HNB/CSG-Id but may pass any handover message directed to the HNB 10 first to the HNB gateway 20.

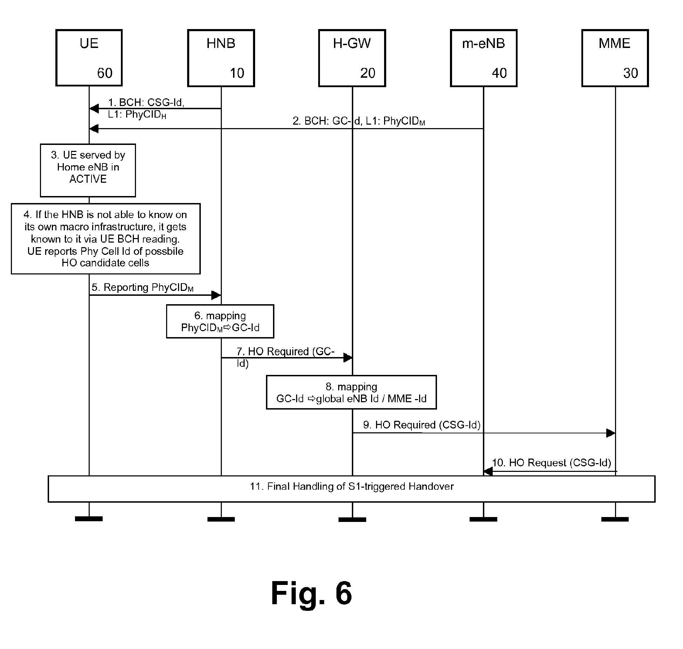

Fig. 6 shows a schematic processing and signaling diagram of a handover procedure from the HNB 10 to the macro eNB 40.

In step 1, the HNB 10 broadcasts to a UE 60 a CSG-ID and a physical cell ID of its home cell. Additionally, the UE 60 receives in step 2 from the macro eNB 40 a global cell ID and a physical cell ID of the macro cell which includes the smaller home cell. In step 3, the UE 60 which is served by the HNB 10 in its home cell is in an active connection state. Then, in step 4, if the HNB 10 is not able to get knowledge about its own macro infrastructure, it may derive such information from the broadcast channel of the UE 60. In step 5, the UE 60 reports the physical cell ID of possible handover candidate macro cells. In step 6, the HNB 10 maps the received physical cell ID into a global cell ID (GC-ID) and forwards in step 7 a handover request with the GC-ID to the HNB gateway 20. In response thereto, the HNB gateway 20 maps the GC-ID to a global eNB ID and/or an MME-ID in step 8 and sends a handover request with a CSG-ID to the MME 30 in step 9. In step 10, the MME 30 sends a handover request to the macro eNB 40 to initiate a final handling of an S1-triggered handover in step 11.

In the above handover case of Fig. 6, mapping the GC-ID to the global eNB-ID and/or MME-ID is advantageous, as it avoids huge amount of routing entries in the HNBs in case the global eNB-ID has changed by configuration.

In the following, a third embodiment is described, where an interface named "X2" is established in order to allow fast and direct communication between peer access devices, such as base stations, HNBs, eNBs, etc., in coordinated deployments. Such communication can be used to support handover procedures, e.g. via data forwarding, or to exchange load information consequently allowing for load distribution amongst adjacent cells.

Conventionally, communication between a HNB and other eNBs/HNBs occurs solely via the so called S1 interface, which is the interface generally connecting a base station to the MME and/or the S-GW. However, the lack of an X2 interface terminating at the HNBs and the only use of a S1 interface deteriorates the performance of procedures like intra-MME handovers, inter-cell interference coordination (ICIC), load balancing and other X2 applications due to the impossibility of direct communication between HNBs and between HNBs and peer ("macro") base stations. The main disadvantage of S1 based procedures is the need of communicating with the EPC for all types of handover procedures or load managing procedure. In cases of intra-MME handover for example communication to the EPC could be limited to the path switch procedures indicating that the UE has "migrated" to a new base station. Also, S1 based communication does not allow for load information exchange between base stations and therefore does not currently support ICIC & load balancing, etc. procedures.

Moreover, the lack of X2 interfaces between HNBs and eNBs/HNBs dictates that mobility procedures when moving between HNB cells and/or between HNB cells and eNB cells are confined to S1 based handovers. This results in a loss of handover performance and to longer handover interruption times due to lack of direct communication between serving and target base stations for assessment of initial handover success and for data forwarding procedures.

Further, the absence of X2 interfaces makes it impossible to perform load transfer between adjacent base stations and eventually it allows to trigger ICIC and load balancing, etc. between neighbour cells.

Although the presence of an X2 interface in the context of HNBs would be beneficial to the overall system performance, the presence of scalability problems still constitutes an overwhelming obstacle.

The above-proposed HNB gateway eases management and processing loads generated by massive uncoordinated deployments of HNBs in the PLMN. The HNB gateway can be used to screen the EPC with regard to excessive number of S1 interface establishments, excessive number of SCTP connections, large scale management of HNB identification parameters etc. The HNB gateway serves a pool of HNBs and appears to the EPC as the primary contact node for communication to the connected HNBs. Effectively, the HNB gateway looks to the EPC like an eNB with the difference that it will relay information to the served HNBs.

For the reasons above and due to the possible presence of a HNB gateway appearing to the EPC as a eNB, one further function of the HNB gateway can be that of an X2 endpoint for connections to other eNBs or between HNBs. This would enable X2 mobility support and ICIC & load balancing, etc. between HNBs and eNBs and between different HNBs.

From a connectivity point of view, the X2 interface can be in fact setup between the HNB and the HNB gateway only. Logically, the HNB is then connected to all HNBs and macro eNBs the HNB gateway is capable to connect to. Consequently, common procedures like X2 Reset, X2 Setup will be executed between a HNB and the HNB gateway only, with the HNB gateway managing the resulting consequences. This enables the HNB to cope with a single X2 interface protocol instance, where the only limit is the number of X2 contexts a HNB is able to handle at once.

This also enables load management functions between HNBs and eNBs, i.e. in case HNBs/eNBs experience an excess of load and cannot accommodate all the UEs in range, the X2 load management functions could allow HNBs/eNBs to communicate such situation to the overlapping eNBs/HNBs and eventually trigger a ICIC & load balancing, etc. procedure.

In the third embodiment, intermediation of the HNB gateway in the establishment of X2 interface (similar to its role in the establishment of the S1 interface between EPC nodes and HNB(s) is proposed. An eNB establishes a single X2 interface with a given HNB gateway, instead of establishing it with all its HNBs. In this manner, the eNB does not need specific knowledge of the HNBs under its coverage or in its mobility-relevant neighbourhood, but may use a single X2 protocol interface instance towards the HNB gateway in order to be able to logically connect to any of them.

Then, a HNB establishes a X2 single interface instance with a specific HNB gateway instead of establishing it with each of its HNB(s) and macro eNB.

Additionally, authentication and authorization functions otherwise needed in case of inbound handover from the eNB to a HNB, which are currently not defined for X2, can be executed in the HNB gateway. HNBs can be involved in area and access restriction handling by passing this information around via the X2 interface, i.e. if the UE is not yet registered for a certain CSG.

Furthermore, radio resource management (RRM) tasks relevant for HNB(s) configuration can be executed in coordination with the macro layer.

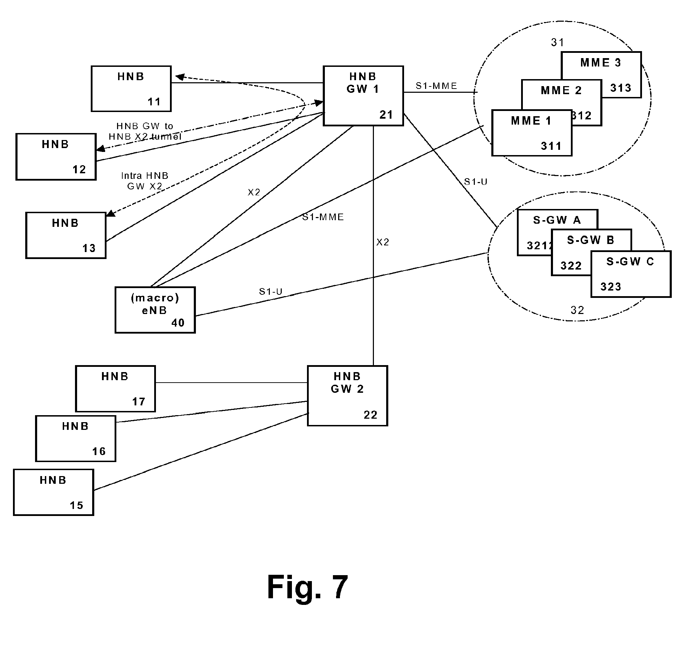

Fig. 7 shows a schematic network architecture with HNBs 11 to 13 as X2 termination points according to a third embodiment. X2 connectivity can be enabled between the HNBs 11 to 13 and a (macro) eNB 40 via X2 establishment from a corresponding HNB gateway 21 to the eNB 40. A second HNB gateway 22 provides connectivity to other HNBs 15 to 17, while an X2 interface is not provided towards the eNB 40. The first HNB gateway 21 provides connectivity to an MME pool 31 and an SGW pool 32, similar to Fig. 1.

Communications between the HNBs 11 to 13 within the same HNB gateway domain can be established via an internal HNB to HNB X2 interface. Furthermore, communications between one of the the HNBs 11 to 13 and one of the HNBs 15 to 17 of different HeNB gateway domains can be established via an X2 interface between the two HNB gateways 21, 22 and between the HNB gateways 21, 22 and their respective HNBs.

X2 connections established between the HNB gateways 21, 22 and external nodes may conform to the already existing standard specifications for X2 interfaces. Additionally, X2 connections between the HNB gateways 21, 22 and their HNBs, i.e. internal to the HNB gateway domains, could either consist of a separate X2 trunk tunnelled over IP links between the HNB gateways and their HNBs (e.g. X2 over IP Security (IPSec) tunnelling) or they could just consist of secured IP tunnels (not necessarily X2 based). Corresponding X2 connections are indicated in Fig. 7 by respective arrows in the gateway domain of the first HNB gateway 21.

The HNB gateways 21, 22 can fulfil the role of X2 traffic relay and being able to forward incoming traffic to the appropriate HNB and outgoing traffic to the appropriate destination nodes. This is not a straightforward task especially for incoming traffic because the HNB gateways 21, 22 only have one X2 interface towards the respective external peer entity (either the eNB 40 or the other HNB gateway).

For the reasons above, means of control plane traffic identification may be used by the HNB gateway to relay control plane traffic to the appropriate HNB(s) could be SCTP port numbers, UDP port numbers, forms of HNB identifications embedded in the X2 message. For relaying control plane traffic to external nodes, i.e. other eNBs, standard identification mechanisms already in place with standard X2 interfaces can be used.

For the sake of user plane traffic identification, relay functions based on GTP can be used, i.e. IP addresses and TEIDs.

X2 interfaces established between HNB(s) and other HNBs/eNBs as shown in Fig. 7 could be used for at least one of data forwarding during handover procedures between serving and target HNB/eNB, load information signalling between neighbour base stations in order to perform load management, and general signalling between peer base stations

One problem particularly relevant to the HNB deployment scenario is ensuring that a UE is allowed to access a target HNB cell before any traffic related to that UE is transmitted in the cell. This issue is relevant because a large number of HNBs may be deployed in the PLMN and a single UE may have access only to a small subset of HNB cells. It is noted that in actual X2 based handover procedures data forwarding may occurs without undertaking any authentication procedure beforehand, i.e. once serving and target eNBs agree that the handover is feasible from a resource point of view the serving eNB starts forwarding user plane data to the target eNB. If the same procedure occurred between e.g. the eNB 40 and one of the HNBs 11 to 13 of Fig. 7 there would be chances that the UE is not allowed to access the HeNB cell. However, the UE may still start receiving data via data forwarding on the target HNB cell. A number of solutions can be proposed to solve this problem. For the macro mobility in an active connection state (e.g. LTE_ACTIVE), area and access restriction information, as received from the MME pool 31 at connection setup and probably updated during the ongoing connection (e.g. when crossing tracking area (TA) borders), a kind of "black list" could be foreseen to steer UE mobility properly.

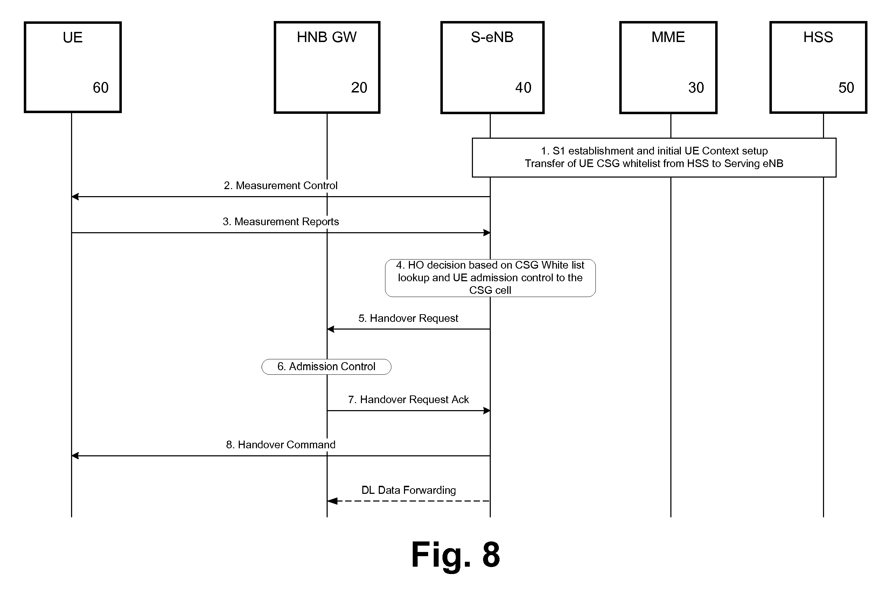

Fig. 8 shows a schematic processing and signaling diagram of an admission control procedure involving a HNB.

The proposed solution of Fig. 8 is based on the assumption that a HNB cell is a Closed Subscriber Group (CSG) cell identified by a Tracking Area Identifier (TAI). A so called CSG "white list" forming part of the UE profile is assumed to indicate the CSGs in which the UE is allowed to enter by listing the TAIs corresponding to such CSGs.

In step 1, during first establishment of the S1 interface between a serving eNB 40 and an MME 30 or a user plane entity (UPE) the serving eNB 40 is provided with a CSG white list retrieved from a home subscriber server (HSS) 50. then, in step 2, the serving eNB 40 configures the UE measurement procedures by sending a measurement control information to a UE 60. In step 3, the UE 60 sends a measurement report to the serving eNB 40 indicating that handover to the CSG cell would be opportune. In step 4, the serving eNB 40 makes handover decision to hand off the UE 60 based on the received measurement report, RRM information and CSG white list lookup for admission control (i.e. whether the UE 60 is allowed to camp on the target TA). Then, in step 5, the serving eNB 40 issues a handover request message to the target HNB gateway 20 passing necessary information to prepare the handover at the target side (UE X2 signalling context reference at serving eNB, UE S1 EPC signalling context reference, etc.). The information reported for the S1 signalling context may also include the CSG white list, so as to allow for future CSG white list lookup at the HNB gateway 20 during future X2 based handovers. In step 6, admission control may be performed by the target HNB gateway 20 depending on the received bearer quality of service (QoS) information to increase likelihood of a successful handover, if the resources can be granted by target side. In step 7, the target HNB gateway 20 prepares handover with the first and second protocol layers L1/L2 and sends a handover request acknowledgement message to the serving eNB 40. In response thereto, the serving eNB 40 generates handover command (RRC message) towards the UE 60 in step 8. Then, DL data forwarding may commence.

It is noted that the procedure described above could as well take place between the serving HNB gateway 20 and the eNB 40 as target device in an equivalent way.

As an alternative to the procedure of Fig. 8, the HNB gateway 20 may keep and maintains a list of UEs subscribed in each of the CSG cells under its domain (i.e. it keeps a mapping of CSG TAIs under its domain and UEs allowed to access it). In this case, the admission control procedures performed in step 4 of Fig. 8 by means of CSG white list lookup can be performed in the HNB gateway 20 and can therefore be moved to step 6.

A second solution is similar to that shown in Fig. 8 and is based on the assumption that a HNB cell is a Closed Subscriber Group (CSG) cell identified by a TAI plus a cell ID (i.e. many CSG cells can fall into the same TA).

In this case, it may not be enough for the serving or target node to check that the target TAI is included in the CSG white list of the UE 60 because many CSG cells could fall under the same TA. However, such checkup could in same cases still be useful as a first inspection on whether the UE 60 can handover to the target cell.

Three possible options can be used for admission control X2 base handovers. As a first option, the serving node may keep a full CSG white list including TAIs and cell IDs and perform a full check as to whether the UE 60 can access the target CSG cell. As a second option, the serving node may only keep a TA white list (including CSG TAIs) and the HNB gateway 20 may keep a mapping of CSG IDs and UEs allowed to camp on them. Under this second option, the serving node checks whether the UE 60 is allowed to access the target TA, while the target node (i.e. target HNB gateway 20) checks whether the UE 60 is allowed to access the target CSG Cell ID. As a third option, the target HNB gateway 20 may keep a list of UEs allowed in each of its CSG cells (identified by TAI and cell ID). In this case, the target HNB gateway may perform all tadmission control procedures comprising TAI check and cell ID check.

If the problem of UE admission control to a CSG cell is considered in the context of X2 based handovers between HNB cells within the same domain, then the HNB gateway may represent both the serving and target node. Therefore, the HNB gateway can be able to relay X2 based messages between the serving HNB and target HNB, and perform UE admission control for access to the target HNB cell by virtue of maintaining full information about the UE CSG white list.

A third solution foresees that the CSG-cell or the CSG network is identified with an identifier similar to the Cell-Id in the UMTS terrestrial access network (UTRAN), i.e. an identifier which is independent from the area configuration for that cells ("arena" means location/routing area in UMTS and tracking area in LTE). In this way, a HNB is not statically configured towards a certain tracking area and hence the tracking area associated with the cell(s) which are served by a HNB can be determined by the HNB gateway to which a HNB is currently attached. The MME, which is aware of the current mapping between current TAI and HNB (CSG) identification, provides the relevant TAI information (as for the macro-case, where a "black list" with area and access restrictions is given) to the macro eNB or the HNB (or just to the HNB gateway) in form of a "white list".

The macro eNB may only need to have the white list and the handover target information in form of a TAI information, whereas the HNB gateway further routes signalling massages towards the respective HNB, if it is allowed according to the white list.

As regards RRM functionality in the context of HNBs, this issue takes specific characteristics since while HNBs are deployed in an uncoordinated way, self-configuration is assumed (based e.g. on information collected by means of an embedded UE receiver prior to operation), and radio parameter setting via an O&M interface may be enabled (maximum transmit power, eventually HO thresholds). Furthermore, O&M for HNBs may be probably operated from a HNB O&M gateway, which in terms of implementation overlaps both with the security gateway and the HNB gateway. The HNB gateway may performs X2 proxying tasks, which enables him to interrelate long term RRM configuration (O&M data) and short-term coordination with macro layer.

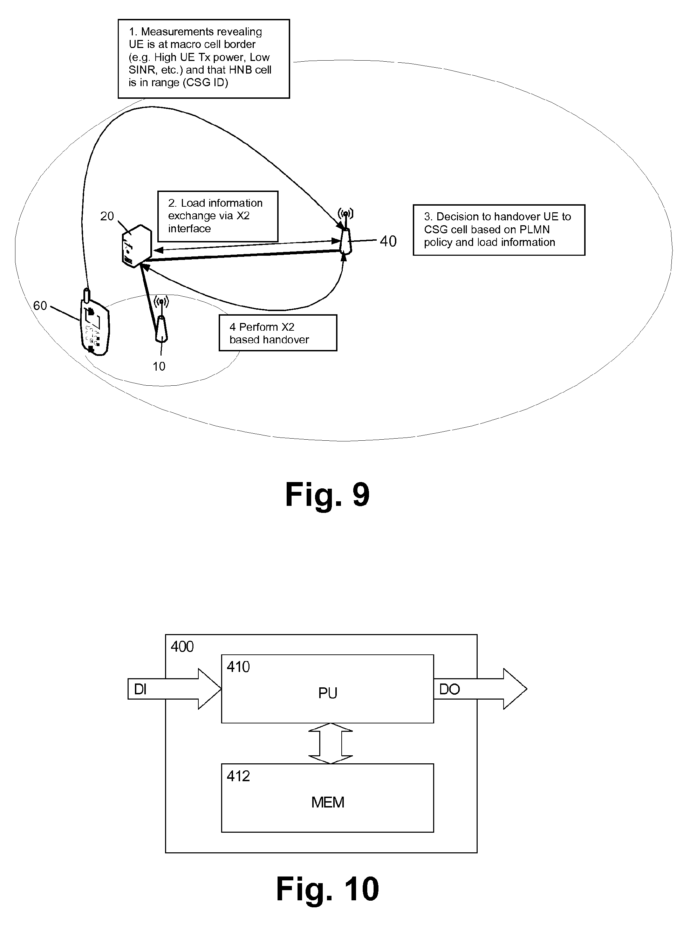

Fig. 9 shows a schematic processing and signaling diagram of a load management procedure between a HNB 10 and a macro eNB 40.

Interference analysis between the local area of the HNB 10 and the wide area of the macro NB 40 may show that "foreign UEs" may, especially under the circumstance described in Fig. 9, create so much interference that the HNB 10 "gets killed" (co-channel case of HNB 10 and macro eNB 40). By centralizing in the HNB gateway RRM functions, authentication and authorization functions, and X2/S1 functions, the HNB gateway 20 is capable of taking case-by-case load balancing decisions between the macro eNB 40 and HNB 10 that maximize the use of the radio interface and respects the access conditions (who is allowed in the cell, etc...).

Taking this into account, another advantage of X2 support by means of HNB gateway 20 is that of intermediating in the exchange of load information and being able to perform ICIC and load management. This is advantageous in scenarios where e.g. the UE 60 is both within macro layer coverage and HNB cell coverage. It could happen that the UE 60 (CSG subscribed UE or foreign UE) is far away from the macro eNB 40 and because of that it generates high levels of interference. From a radio management point of view it would be beneficial if the UE 60 could then camp on the HNB cell (much closer due to limited HNB coverage).
This could be achieved by allowing the macro eNB 40 and the HNB 10 to exchange load information via X2 interface. If the HNB 10 reveals to have spare resources so as to accommodate the UE 60 and if the UE 60 is allowed to camp on the HNB cell (either because the UE 60 is included in the CSG or because the operator considers it opportune to handover the UE 60 to the HNB CSG cell) a X2 based handover between the macro eNB 40 and HNB 10 could be initiated.

According to Fig. 9, the eNM 40 receives a measurement report from the UE 60 in step 1, which reveals that the UE 60 is at the macro cell border and that an HNB cell is in range. In step 2, load information is exchanged via X2 interface between the HNB gateway 20 and the eNB 40. Based on the load information and the PLMN policy, the eNB 40 decides on handover in step 3, and performs an X2 based handover procedure in step 4. Thus, the HNB X2 interface can be used for load management purposes. It is noted that the same procedure shown in Fig. 9 could be applied to load management procedures between HNB cells.

Fig. 10 shows a schematic block diagram of an alternative software-based implementation according to a fourth embodiment. The required functionalities can be implemented in any network entity (which may be provided in the HNB 10 or the HNB gateway 20) with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of the above device-specific functionalities which may be implemented as the above mentioned software routines. The processing steps may be performed on the basis of input data DI and may generate output data DO. In case of the HNB 10, the input data DI may correspond to a trigger information for triggering a connection set-up, and the output data DO may correspond to single gateway address. In case of the HNB gateway 20, the input data DI may correspond to the CSG-ID and location information received from the HNB 10, and the output data DO may correspond to the address(es) derived from the mapping underlying of the 1:n relay function.

Consequently, the above embodiments of the HNB and HNB gateway may be implemented as a computer program product comprising code means for generating each individual step of the signaling procedures for the respective entity when run on a computer device or data processor of the respective entity at the HNB 10 or the HNB gateway 20 or any corresponding network entity.

In summary, a method, apparatus, and computer program product have been described, wherein a connection to a core network is established via a wireless access device and a gateway device. Connectivity of the wireless access device is restricted to a single address of the core network, wherein the single address is used to establish the connection to a pre-defined gateway device with multi-node connectivity. The gateway device is provided with a relay function for mapping a single input address to a plurality of core network addresses based on a location information of the wireless access device.

It is apparent that the invention can easily be extended to any service and network environment and is not restricted to the LTE technology area and in particular not to home eNBs. The proposed embodiments can be implemented in connection with any base station with limited coverage (usually employed for indoor coverage and improved user experience in the home area) deployed in a wireless network. The embodiments may thus vary within the scope of the attached claims.

## Claims

1. A method of providing network access, said method comprising:
a. establishing a connection to a core network via a wireless access device (10);
b. restricting connectivity of said wireless access device (10) to a single address of said core network; and
c. using said single address to establish said connection to a pre-defined gateway device (20) with multi-node connectivity.

2. A method off providing network access, said method comprising:
a. using a gateway device (20) for establishing a connection from a wireless access device (10) to a core network; and
b. providing said gateway device (20)with a relay function for mapping a single input address to a plurality of core network addresses based on a location information of said wireless access device (10).

3. The method according to claim 1 or 2, further comprising establishing a user-plane connection to said gateway device (20) via a single Internet Protocol address.

4. The method according to claim 2, further comprising connecting said gateway device (20) to said core network via several Internet Protocol addresses and several transmission protocol streams.

5. The method according to any one of the preceding claims, further comprising establishing a control-plane connection to said gateway device (20) via a single transmission protocol association containing a single transmission protocol stream and a single Internet Protocol address.

6. The method according to any one of the preceding claims, further comprising performing automatic setup of said gateway device (20) with a pre-defined identification.

7. The method according to claim 6, wherein said predefined identification comprises a tracking area with at least one dedicated tracking area code.

8. The method according to any one of the claims 2 to 7, further comprising providing a mapping table to translate said location information to a connectivity of a pool (31) of mobility management entities of at least one of owning and foreign operators.

9. The method according to claim 8, further comprising selecting said pool (31) of mobility management entities based on a sub-number-space allocation to a respective operator or directly based on a network identity.

10. The method according to any one of claims 2 to 9, further comprising using said relay function to relate a location of said wireless access device (10) to a pool (31) of mobility management entities serving a macro access device (40) which provides a macro cell under which said wireless access device is located.

11. The method according to claim 10, further comprising using said relay function to relay handover messages between said wireless access device (10) and said macro access device (40).

12. The method according to claim 11, further comprising using said relay function to map a global cell identity to a global identity of said macro access device (40) or said pool (31) of mobile management entities.

13. The method according to any one of claims 2 to 12, further comprising using said relay function to translate a tunnel endpoint identifier allocated by said wireless access device (10) to a core network range.

14. The method according to claim 13, further comprising signaling said core network range to said wireless access device (10).

15. The method according to any one of claims 2 to 14, further comprising using said relay function to provide a logical signaling interface between said wireless access device (10) and other wireless access devices.

16. The method according to claim 15, further comprising using said logical signaling interface for executing at least one of authentication and authorization functions, radio resource management tasks, data forwarding during handover procedures, load information signaling, and general signaling between peer access devices.

17. The method according to claim 15 or 16, further comprising using said relay function to identify control-plane traffic based on identification information embedded in messages of said logical signaling interface.

18. The method according to any one of the preceding claims, wherein a cell of said wireless access device (10) is established as a closed subscriber group cell identified by a tracking area identifier.

19. An apparatus for providing access to a core network, said apparatus comprising:
a. connecting means which provide a connectivity restricted to a single address of said core network; and
b. addressing means for using said single address to establish said connection to a pre-defined gateway device (20) with multi-node connectivity.

20. The apparatus according to claim 19, wherein said connecting means (104) is adapted to establish a control-plane connection to said gateway device (20) via a single transmission protocol association containing a single transmission protocol stream and a single Internet Protocol address.

21. The apparatus according to claim 19 or 20, wherein said connecting means (104) is adapted to establish a user-plane connection to said gateway device (20) via a single Internet Protocol address.

22. A wireless access device comprising an apparatus according to claim 19.

23. An apparatus for establishing a connection from a wireless access device (10) to a core network, said apparatus comprising relay means (204) for mapping a single input address to a plurality of core network addresses based on a location information of said wireless access device.

24. The apparatus according to claim 23, wherein said relay means (204) is configured to provide a connection to said core network via several Internet Protocol addresses and several transmission protocol streams.

25. The apparatus according to claim 23 or 24, further comprising storing means (205) for storing a mapping table configured to translate said location information to a connectivity of a pool (31) of mobility management entities of at least one of owning and foreign operators.

26. The apparatus according to any one of claims 23 to 25, wherein said relay means (204) provides a logical signaling interface between said wireless access device (10) and other wireless access devices or macro access devices which provide macro cells.

27. A gateway device comprising an apparatus according to claim 23.

28. A chip module comprising an apparatus according to claim 19 or 23.

29. A computer program product comprising code means for producing the steps of method claims 1 or 2 when run on a computer device.
